(19) Europäisches Patentamt
European Patent Office
Office européen des brevets

(11) Veröffentlichungsnummer: **0 027 609**
**B1**

(12) **EUROPÄISCHE PATENTSCHRIFT**

(45) Veröffentlichungstag der Patentschrift: **22.12.82**

(51) Int. Cl.³: **C 08 J 9/22,** C 08 L 25/04, C 08 K 5/06, C 08 K 5/10

(21) Anmeldenummer: **80106161.5**

(22) Anmeldetag: **10.10.80**

(54) **Teilchenförmige, treibmittelhaltige Styrolpolymerisate und deren Verwendung.**

(30) Priorität: **18.10.79 DE 2942182**

(43) Veröffentlichungstag der Anmeldung: **29.04.81 Patentblatt 81/17**

(45) Bekanntmachung des Hinweises auf die Patenterteilung: **22.12.82 Patentblatt 82/51**

(84) Benannte Vertragsstaaten: **DE FR GB IT NL**

(56) Entgegenhaltungen:
**DE-A-2 804 688**
**GB-A-1 409 285**

(73) Patentinhaber: **BASF Aktiengesellschaft, Carl-Bosch-Strasse 38, D-6700 Ludwigshafen (DE)**

(72) Erfinder: **Hahn, Klaus, Dr., Burggasse 2, D-6840 Lampertheim (DE)**
Erfinder: **Rath, Hans Peter, Dr., Friedhofstrasse 7, D-6718 Gruenstadt (DE)**
Erfinder: **Walter, Manfred, Dr., Hans-Purrmann-Allee 18, D-6720 Speyer (DE)**

**EP 0 027 609 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Teilchenförmige, treibmittelhaltige Styrolpolymerisate und deren Verwendung

Die Erfindung betrifft teilchenförmige, treibmittelhaltige Styrolpolymerisate, die bei der Verarbeitung zu Schaumstoff-Formkörpern kurze Entformzeiten ergeben, wobei die einzelnen Schaumstoffpartikel gut miteinander verschweisst sind.

Die Herstellung von Formkörpern aus schaumförmigen Styrolpolymerisaten ist bekannt. In der Technik hat sich eine Arbeitsweise bewährt, bei der die verschäumbaren treibmittelhaltigen Polymerisatteilchen in einer ersten Arbeitsstufe zunächst so lange auf Temperaturen oberhalb ihres Erweichungspunktes erhitzt werden, bis sie zu einem losen Haufwerk von gewünschtem Schüttgewicht aufgeschäumt sind. Dieser Vorgang wird als «Vorschäumen» bezeichnet. Damit sich expandierbare Styrolpolymerisate gut verarbeiten lassen, dürfen die einzelnen Partikel beim Vorschäumen nicht zu grösseren Agglomeraten zusammensintern, weil sonst die Förderung des vorgeschäumten Gutes sowie das Füllen von Formen behindert wird. Die vorgeschäumten Teilchen werden zunächst mehrere Stunden gelagert und dann in einer perforierten druckfesten Form durch erneutes Erhitzen mit Heissdampf weiter aufgeschäumt, wobei sie zu einem Formkörper verschweissen, der in seinen Dimensionen dem Hohlraum der Form entspricht. Dieser zweite Arbeitsgang wird als Ausschäumen bezeichnet. Nach dem Ausschäumen muss der Formkörper innerhalb der Form abkühlen. Dabei muss so lange gewartet werden, bis auch das Innere des Formkörpers auf Temperaturen unterhalb des Erweichungspunktes des Styrolpolymerisats abgekühlt ist. Wird der Formkörper vorzeitig der Form entnommen, so kann er sich verziehen oder kollabieren. Lange Kühlzeiten erhöhen natürlich die Herstellungskosten. Es hat daher nicht an Versuchen gefehlt, die Entformzeit zu verkürzen.

In der DE-OS 2 133 253 wird vorgeschlagen, expandierbare Polystyrolteilchen mit Glyzerinestern von höheren Fettsäuren zu beschichten. Diese bewirken tatsächlich eine erhebliche Verringerung der Entformzeit. Nach der DE-OS 2 256 842 sollen die Teilchen zusätzlich noch mit einem feinverteilten anorganischen Feststoff überzogen werden, wodurch die Neigung zum Agglomerieren herabgesetzt wird. Es hat sich jedoch gezeigt, dass treibmittelhaltige Polystyrolteilchen, die mit Glyzerinestern beschichtet sind, bei der Verarbeitung Schaumstoff-Formkörper ergeben, bei denen die Verschweissung der einzelnen Schaumstoffteilchen nicht optimal ist.

Der Erfindung lag daher die Aufgabe zugrunde, teilchenförmige, treibmittelhaltige Styrolpolymerisate bereitzustellen, die nicht zum Agglomerieren neigen und bei der Verarbeitung zu Schaumstoff-Formkörpern kurze Entformzeiten ergeben, wobei aber die Schaumstoffteilchen gut miteinander verschweissen.

Diese Aufgabe wird erfindungsgemäss dadurch gelöst, dass die Teilchen oberflächlich mit 0,05 bis 1 Gew.% eines Glyzerindialkylethers beschichtet werden. Die Mindestformverweilzeiten sind im Vergleich mit den bisher üblichen Beschichtungsmitteln auf Basis von Glyzerinestern um 20 bis 50% verkürzt, und es werden wesentlich höhere Verschweissungswerte gefunden. Die Schaumstoff-Formkörper weisen eine gleichmässige Rohdichteverteilung und eine gute Dimensionsstabilität auf.

Styrolpolymerisate im Sinn der Erfindung sind Polystyrol und Mischpolymerisate des Styrols mit anderen $\alpha$,$\beta$-olefinisch ungesättigten Verbindungen, die mindestens 50 Gewichtsteile Styrol einpolymerisiert enthalten. Als Mischpolymerisationskomponenten kommen z.B. in Frage $\alpha$-Methylstyrol, kernhalogenierte Styrole, kernalkylierte Styrole, Acrylnitril, Ester der Acryl- oder Methacrylsäue von Alkoholen mit 1 bis 8 C-Atomen, N-Vinylverbindungen, wie Vinylcarbazol, Maleinsäureanhydrid oder auch geringe Mengen an Verbindungen, die zwei polymerisierbare Doppelbindungen enthalten, wie Butadien, Divinylbenzol oder Butandioldiacrylat.

Die teilchenförmigen Styrolpolymerisate werden nach den üblichen Verfahren hergestellt. Sie können in Perlform, in Form zylindrischer Granulate oder in Form von Brocken vorliegen, wie sie beim Mahlen von Substanzpolymerisaten erhalten werden. Die Teilchen haben vorteilhaft Durchmesser von 0,1 bis 6 mm, insbesondere von 0,4 bis 3 mm.

Die Styrolpolymerisate enthalten in homogener Verteilung ein oder mehrere Treibmittel. Als Treibmittel eignen sich z.B. unter Normalbedingungen gasförmige oder flüssige Kohlenwasserstoffe oder Halogenkohlenwasserstoffe, die das Styrolpolymerisat nicht lösen und deren Siedepunkt unter dem Erweichungspunkt des Polymerisats liegt. Geeignete Treibmittel sind z.B. Propan, Butan, Pentan, Cyclopentan, Hexan, Cyclohexan, Dichlordifluormethan und Trifluorchlormethan. Die Treibmittel sind in den Styrolpolymerisaten im allgemeinen in Mengen zwischen 3 und 15 Gewichtsprozent, bezogen auf das Polymerisat, enthalten.

Die teilchenförmigen Styrolpolymerisate sind erfindungsgemäss mit 0,05 bis 1, vorzugsweise 0,1 bis 0,5 Gew.% eines Glyzerindialkylethers beschichtet. Bevorzugt sind Glyzerindialkylether der allgemeinen Formel

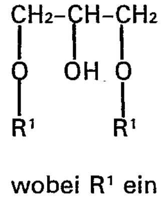

wobei $R^1$ ein vorzugsweise linearer Alkylrest mit 12 bis 30 C-Atomen ist. Neben den Glyzerindialkylethern können die Styrolpolymerisatteilchen noch herkömmliche Mittel zur Verkürzung der

Entformzeit, beispielsweise Glyzerinester, wie Glyzerinmonostearat als Beschichtung enthalten. Besonders günstig sind Mischungen von Glyzerindialkylethern mit Glyzerinestern im Gewichtsverhältnis 5:1 bis 1:5.

Die Glyzerindialkylether befinden sich, zumindest zum überwiegenden Teil als Überzug auf der Oberfläche der expandierbaren Polystyrolpartikel, in einer möglichst gleichmässigen Verteilung. Die Art der Auftragung ist nicht kritisch, sie kann z.B. durch einfaches Auftrommeln des feinteiligen Glyzerindialkylethers auf die Styrolpolymerisatteilchen in handelsüblichen Mischern erfolgen. Es ist jedoch auch möglich, den Glyzerindialkylether aus einer wässrigen Dispersion oder einer Lösung in einem organischen Lösungsmittel aufzutragen, wobei das Lösungsmittel bzw. das Wasser beim Auftragen entfernt werden muss. Ferner können die Glyzerindialkylether auch am Ende oder gegen Ende der Suspensionspolymerisation zu dem Ansatz der Styrolperlpolymerisation hinzugefügt werden.

Die Styrolpolymerisate können auch Zusätze an anderen Stoffen enthalten, die den expandierbaren Produkten bestimmte Eigenschaften verleihen. Genannt seien beispielsweise Flammschutzmittel auf Basis von organischen Brom- oder Chlorverbindungen, wie Trisdibrompropylphosphat, Hexabromcyclododecan, Chlorparaffin sowie Synergisten für Flammschutzmittel, wie Dicumyl und hochzersetzliche organische Peroxide; ferner Antistatika, Stabilisatoren, Farbstoffe, Schmiermittel, Füllstoffe und beim Vorschäumen antiverklebend wirkende Stoffe, wie Zinkstearat, Melaminformaldehydkondensate oder Kieselsäure. Die Zusatzstoffe können je nach der beabsichtigten Wirkung in den Teilchen homogen verteilt oder als Oberflächenbeschichtung vorliegen.

Die erfindungsgemässen teilchenförmigen treibmittelhaltigen Styrolpolymerisate können nach üblichem Verfahren zu Schaumstoff-Formkörpern mit einem Raumgewicht von 5 bis 100 g/l verschäumt werden. Die Mindestformverweilzeiten (MFZ) werden nach folgender Methode bestimmt: Die vorgeschäumten Styrolpolymerisatpartikel werden durch Bedampfen mit Wasserdampf in einer Form zu einem Formkörper verschweisst, in deren Mittelpunkt eine Drucksonde angeordnet ist. Es wird die Zeit vom Beginn des Kühlens bis zu dem Zeitpunkt ermittelt, an dem der Druck im Inneren des Formkörpers auf 1,05 bar abgesunken ist. Erfahrungsgemäss hat sich gezeigt, dass bei diesem Druck die Formkörper gefahrlos entformt werden können.

Zur Beurteilung der Verschweissung werden 5 cm dicke, einen Tag gelagerte Schaumstoffproben über eine Kante gebrochen. Das Verhältnis von dabei durchgerissenen Teilchen zu denen, die insgesamt in der Bruchfläche sichtbar sind, wird abgeschätzt und in Prozent angegeben. Bruchbild 0% bedeutet, dass die Haftfestigkeit der Teilchen aneinander geringer ist, als die Festigkeit der Teilchen selbst. 100% bedeutet, dass nur durchgerissene Teilchen sichtbar sind.

Beispiele

Expandierbares Polystyrol mit einem Gehalt von 6,4 Gew.% n-Pentan und einem mittleren Teilchendurchmesser von 1,5 mm wurde durch Auftrommeln im Schaufelmischer mit den verschiedenen Substanzen beschichtet. Durch Einwirkung von strömendem Wasserdampf wurden die Polystyrolteilchen in einem kontinuierlichen Rührvorschäumer auf ein Schüttgewicht von 15 g/l vorgeschäumt, 24 Stunden zwischengelagert und anschliessend in einer Blockform durch Bedampfung mit einem Druck von 1,8 bar während 20 Sekunden zu einem Block verschweisst. Die gemessenen Mindestformverweilzeiten sowie die Verschweissungswerte sind in der Tabelle zusammengestellt.

Tabelle

| | | | | | | | |
|---|---|---|---|---|---|---|---|
| Glyzerinmonostearat | (Gew.-%) | 0,4 | – | 0,2 | 0,1 | – | – |
| Glyzerindistearylether | (Gew.-%) | – | 0,4 | 0,2 | 0,3 | – | – |
| Glyzerindihexadecylether | (Gew.-%) | – | – | – | – | 0,4 | – |
| Glyzerindimyristylether | (Gew.-%) | – | – | – | – | – | 0,4 |
| Mindestformverweilzeit | (min) | 38 | 22 | 21 | 22 | 23 | 26 |
| Bruchverschweissung | (%) | 40 | 85 | 65 | 70 | 80 | 80 |

Die Beschichtungen enthielten zusätzlich 0,02 Gew.-% Zn-Stearat

**Patentansprüche**

1. Teilchenförmige, treibmittelhaltige Styrolpolymerisate, dadurch gekennzeichnet, dass sie oberflächlich mit 0,05 bis 1 Gew.% eines Glyzerindialkylethers beschichtet sind.

2. Teilchenförmige, treibmittelhaltige Styrolpolymerisate nach Anspruch 1, dadurch gekennzeichnet, dass ein Glyzerindialkylether der allgemeinen Formel

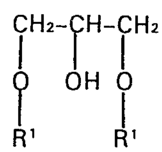

verwendet wird, wobei $R^1$ ein Alkylrest mit 12 bis 30 C-Atomen ist.

3. Teilchenförmige, treibmittelhaltige Styrolpolymerisate nach Anspruch 1, dadurch gekennzeichnet, dass sie mit einer Mischung aus einem Glyzerindialkylether und einem Glyzerinester im Gewichtsverhältnis 5:1 bis 1:5 beschichtet sind.

4. Verwendung der teilchenförmigen, treibmittelhaltigen Styrolpolymerisate nach Anspruch 1 zur Herstellung von Schaumstoff-Formkörpern mit einem Raumgewicht von 5 bis 100 g/l.

## Claims

1. A particulate styrene polymer, containing blowing agent, which is surface-coated with from 0.05 to 1% by weight of a glycerol dialkyl ether.

2. A particulate styrene polymer containing blowing agent, as claimed in claim 1, wherein the glycerol dialkyl ether used has the general formula

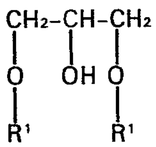

where $R^1$ is alkyl with 12 to 30 carbon atoms.

3. A particulate styrene polymer containing blowing agent, as claimed in claim 1, which is coated with a mixture of a glycerol dialkyl ether and a glycerol ester in a weight ratio of from 5:1 to 1:5.

4. Use of a particulate styrene polymer containing blowing agent, as claimed in claim 1, for the production of foam articles having a density of from 5 to 100 g/l.

## Revendications

1. Polymérisats de styrène, contenant un gonflant et sous forme particulaire, caractérisés par le fait qu'ils sont enduits superficiellement de 0,05 à 1% en poids d'un éther dialkylique de glycérol.

2. Polymérisats de styrène, contenant un gonflant et sous forme particulaire, selon la revendication 1, caractérisés par le fait que l'on utilise un éther dialkylique de glycérol de formule générale

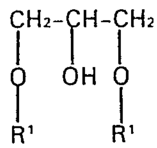

où $R^1$ est un reste alkyle ayant 12 à 30 atomes C.

3. Polymérisats de styrène, contenant un gonflant et sous forme particulaire, selon la revendication 1, caractérisés par le fait qu'ils sont enduits d'un mélange d'un éther dialkylique de glycérol et d'un ester de glycérol, dans le rapport en poids de 5/1 à 1/5.

4. Utilisation des polymérisats de styrène, contenant un gonflant et sous forme particulaire, selon la revendication 1, pour la fabrication de corps moulés alvéolaires d'un poids spécifique de 5 à 100 g/l.